# EUROPEAN PATENT APPLICATION

(11) **EP 1 631 059 A2**
(43) Date of publication of application: **01.03.2006**
(21) Application number: 05254865.8
(22) Date of filing: 04.08.2005
(51) Int. Cl.: H04N 5/00, H04N 7/24

(54) **Content service method, content relay method, content output method and servers, output devices and transmission/receving systems employing said methods**

(30) Priority: 27.08.2004 KR 2004068033
(71) Applicant: Samsung Electronics Co., Ltd., Yeongtong-gu Suwon-city, Gyeonggi-do 442-742 (KR)
(72) Inventor: You, Young-kuk, Seongdong-gu Seoul (KR); Kim, Chi-hurn, Taean-eup Hwaseong-si Gyeonggi-do (KR); Choi, Yang-lim, Seongnam-si Gyeonggi-do (KR)
(74) Representative: Brandon, Paul Laurence

(57) **Abstract**

Provided are a system and a method for transmitting and receiving content audio-visual or multimedia at home. The content service method includes: reconstructing encrypted compressed content back into compressed contents by decrypting the encrypted compressed content according to a first scheme; encrypting the reconstructed compressed content according to a second scheme; and transmitting the encrypted compressed content via a predetermined link. Therefore, the encrypting and decrypting of contents are easily supported without an encoding process in a content server terminal at home.

## Description

The present invention relates to content service, relay and output methods, and to servers, output devices and transmission/receiving systems employing said methods, in particular at home.

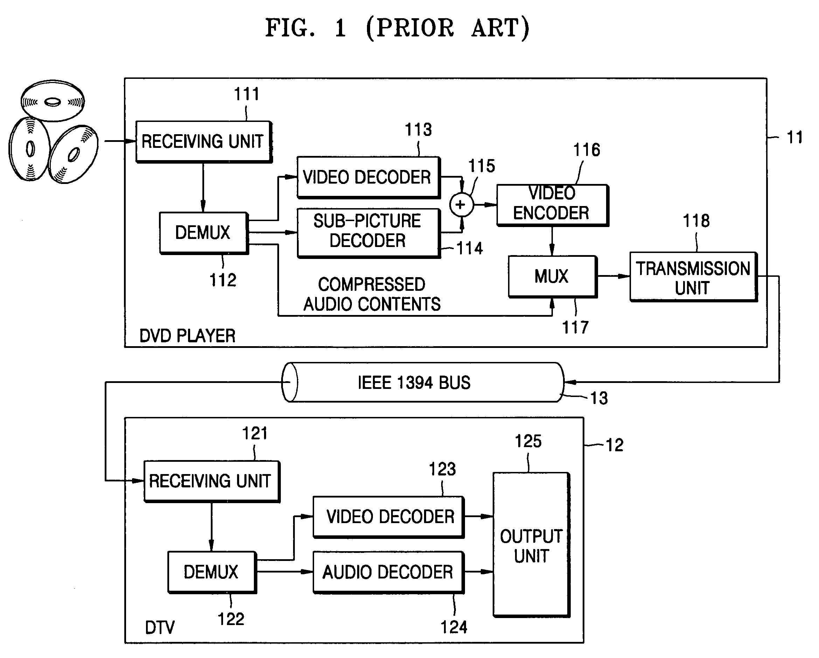

FIG. 1 is a configuration diagram of a conventional system for transmitting and receiving contents at home.

Referring to FIG. 1, the conventional content transmission/receiving system includes a digital video disk 11 (DVD) player, a digital television (DTV) 12, and IEEE (Institute of Electrical and Electronics Engineers) 1394 bus 13.

The DVD player 11 includes a receiving unit 111, a demux 112, a video decoder 113, a sub-picture decoder 114, a mixer 115, a video encoder 116, a mux 117, and a transmission unit 118.

The receiving unit 111 receives compressed content by reading data recorded from the DVD. The demux 112 separates compressed video content, compressed sub-picture content, and compressed audio content from the received compressed content. The video decoder 113 reconstructs the compressed video content back into the original video content by decoding the compressed video content separated by the demux 112. The sub-picture decoder 114 reconstructs the compressed sub-picture content back into the original sub-picture content by decoding the compressed sub-picture content separated by the demux 112. The mixer 115 mixes the video content reconstructed by the video decoder 113 and the sub-picture content reconstructed by the sub-picture decoder 114. The video encoder 116 encodes the content mixed by the mixer 115 to generate the compressed video content. The mux 117 combines the compressed video content generated by the video encoder 116 and the compressed audio content separated by the demux 112. The transmission unit 118 sends the compressed content combined by the mux 117 to the DTV 12 via the IEEE 1394 bus 13.

The DTV 12 includes a receiving unit 121, a demux 122, a video decoder 123, an audio decoder 124, and an output unit 125.

The receiving unit 121 receives the compressed content from the DVD player 11 via the IEEE 1394 bus 13. The demux 122 separates the compressed video content and the compressed audio content from the compressed content received by the receiving unit 121. The video decoder 123 decodes the compressed video contents separated by the demux 122 to reconstruct the compressed video content back into the original video content. The audio decoder 124 decodes the compressed audio content separated by the demux 122 to reconstruct the compressed audio content back into the original audio content. The output unit 125 outputs the video content reconstructed by the video decoder 123 and the audio content reconstructed by the audio decoder 124 to a user.

As shown in FIG. 1, since the conventional content transmission/receiving system dose not support the encryption of content, it is difficult to protect the content from those who intend to use the content without permission. Further, in the conventional content transmission/receiving system, the DVD player 11 encodes the decoded content again due to the limit of the bandwidth of the IEEE 1394 bus 13 and a link for connecting the DVD player 11 and DTV 12. Generally, the conventional content transmission/receiving system is not commercially available to consumers since no consumer electronics (CE) device included in the system has a higher-than-standard definition (SD) grade encoder.

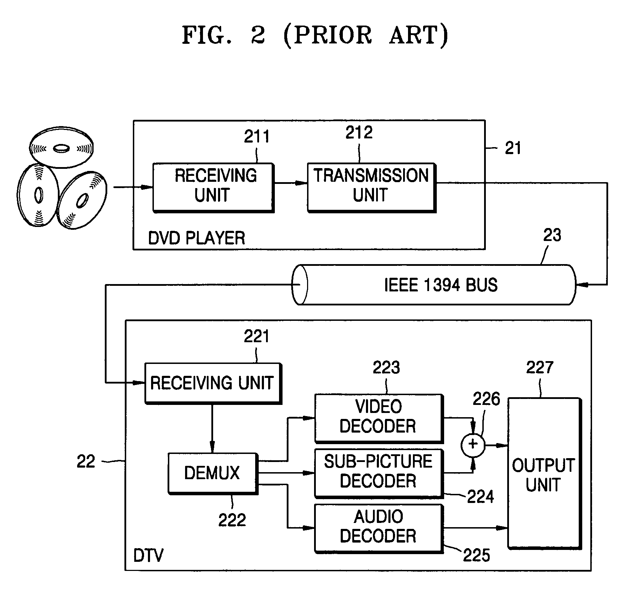

FIG. 2 is a configuration diagram of another conventional system for transmitting and receiving content.

Referring to FIG. 2, the conventional content transmission/receiving system includes a DVD player 21, a DTV 22, and an IEEE 1394 bus 23.

The DVD player 21 includes a receiving unit 211 and a transmission unit 212.

The receiving unit 211 receives compressed content by reading data recorded from the DVD. The transmission unit 212 transmits the compressed content received by the receiving unit 211 to the DTV 22 via the IEEE 1394 bus.

The DTV 22 includes a receiving unit 221, a demux 222, a video decoder 223, a sub-picture decoder 224, an audio decoder 225, a mixer 226, and an output unit 227.

The receiving unit 221 receives the compressed content from the DVD player 21 via the IEEE 1394 bus 23. The demux 222 separates compressed video content, compressed sub-picture content, and compressed audio content from the compressed content received by the receiving unit 221.

The video decoder 223 decodes the compressed video content separated by the demux 223 to reconstruct the compressed video content back into the original video content. The sub-picture decoder 224 decodes the compressed video content separated by the demux 222 to reconstruct to the compressed sub-picture content back into the original sub-picture contents. The audio decoder 225 decodes the compressed audio content separated by the demux 222 to reconstruct the compressed audio content back into the original audio content.

The mixer 226 mixes the video content reconstructed by the video decoder 223 and the sub-picture content reconstructed by the sub-picture decoder 224. The output unit 227 outputs the content combined by the mixer 226 and the audio content reconstructed by the audio decoder 225 to a user.

As shown in FIG. 2, since the conventional content transmission/receiving system does not support the encryption and decryption of content, it is difficult to protect the content from those who intend to use the content without permission. Additionally, in the conventional content transmission/receiving system shown in FIG. 2, even if it is intended to encrypt and decrypt content and protect the IEEE 1394 bus 23, which is a link, a content provider can protect and manage the content only until the link protection operation, and a content output device such as the DTV 22 is not under the control of the content provider. That is, the content provider cannot protect and manage the content up to the point where content are displayed, and thus the content can hardly be protected completely.

According to a first aspect of the present invention, there is provided a first content service method comprising: reconstructing encrypted compressed content back into compressed content by decoding the encrypted compressed content according to a first scheme; encrypting the reconstructed compressed content according to a second scheme; and transmitting the encrypted compressed content via a predetermined link.

According to a second aspect of the present invention, there is provided a server comprising: a decrypting unit arranged to reconstruct encrypted compressed content back into compressed content by decrypting the encrypted compressed content according to a first scheme; an encrypting unit arranged to encrypt the compressed content, which is reconstructed by the decrypting unit, according to a second scheme; and a transmission unit arranged to transmit the compressed content encrypted by the encrypting unit via a predetermined link.

According to a third aspect of the present invention, there is provided a computer readable recording medium having embodied thereon a computer program for executing the content service method of the first aspect of the invention.

According to a fourth aspect of the present invention, there is provided a content output method comprising: receiving an encrypted compressed content via a predetermined link; reconstructing the received encrypted compressed content back into compressed content by decrypting the received encrypted compressed content; reconstructing the reconstructed compressed content back into original contents by decoding the reconstructed compressed content; and outputting the reconstructed original content to a user.

According to a fifth aspect of the present invention, there is provided a first content output device comprising: a receiving unit arranged to receive encrypted compressed content via a predetermined link; a decrypting unit arranged to reconstruct the encrypted compressed content back into compressed content by decrypting the received encrypted compressed content; a decoder arranged to reconstruct the compressed content back into original content by decoding the compressed content which are reconstructed by the decrypting unit; and an output unit arranged to output the contents reconstructed by the decoder to a user.

According to a sixth aspect of the present invention, there is provided a computer readable recording medium having embodied thereon a computer program for executing the first content output method of the fourth aspect of the invention.

According to a seventh aspect of the present invention, there is provided a content relay method comprising: receiving encrypted compressed content via a first link; reconstructing the encrypted compressed content back into compressed content by decrypting the received encrypted compressed content; reconstructing the compressed content back into original contents by decoding the reconstructed compressed content; encrypting the reconstructed content to generate encrypted content; and transmitting the encrypted content via a second link.

According to an eighth aspect of the present invention, there is provided a content output method comprising: receiving encrypted content via a predetermined link; reconstructing the encrypted content back into a original content by decrypting the received encrypted content; and outputting the reconstructed contents to a user.

According to a ninth aspect of the present invention, there is provided a content service method comprising: double-encrypting compressed content, which has been encrypted according to a first scheme, according to a second scheme to generate double-encrypted compressed content; and transmitting the double-encrypted compressed content via a predetermined link.

According to a tenth aspect of the present invention, there is provided a second a server comprising: an encrypting unit arranged to double-encrypt compressed content, which has been encrypted according to a first scheme, according to a second scheme; and a transmission unit arranged to transmit the double-encrypted compressed contents via a predetermined link.

According to an eleventh aspect of the present invention, there is provided a computer readable recording medium having embodied thereon a computer program for executing the content service method of the ninth aspect of the invention.

According to a twelfth aspect of the present invention, there is provided a content output method comprising: receiving double-encrypted compressed contents via a predetermined link; reconstructing the double-encrypted compressed content back into encrypted compressed content by decrypting the received double-encrypted compressed content according to a first scheme; reconstructing the encrypted compressed content back into compressed content by further decrypting the reconstructed encrypted compressed content according to a second scheme; reconstructing the compressed content back into original content by further decoding the reconstructed compressed content; and outputting the reconstructed original contents to a user.

According to a thirteenth aspect of the present invention, there is provided a content output device comprising: a receiving unit arranged to receive double-encrypted compressed content via a predetermined link; a first decrypting unit reconstructing the double-encrypted compressed content back into encrypted compressed contents by decrypting the received double-encrypted compressed content according to a first scheme; a second decrypting unit arranged to reconstruct the encrypted compressed content back into compressed content by further decrypting the compressed content, which has been reconstructed by the first decrypting unit, according to a second scheme; a decoder arranged to reconstruct the compressed content back into original content by decoding the compressed content, which have been reconstructed by the second decrypting unit; and an output unit arranged to output the original content reconstructed by the decoder to a user.

According to a fourteenth aspect of the present invention, there is provided a computer readable recording medium having embodied thereon a computer program for executing the third content output method of the twelfth aspect of the invention.

According to a fifteenth aspect of the present invention, there is provided a content relay method comprising: receiving double-encrypted compressed content via a first link; reconstructing the double-encrypted compressed content back into encrypted compressed content by decrypting the received double-encrypted compressed content according to a first scheme; reconstructing the encrypted compressed content back into compressed content by further decrypting the reconstructed encrypted compressed content according to a second scheme; reconstructing the compressed content back into original contents by decoding the reconstructed compressed content; encrypting the reconstructed original contents; and transmitting the encrypted content via a second link.

In this way, preferred embodiments of present invention provide methods and apparatus that support encryption and decryption of contents transmitted and received at home without an encoding process in a content server terminal, such as a digital video disk (DVD) player, and a blue-ray disk (BD) player.

According to the present invention there is provided an apparatus and method as set forth in the appended claims. Preferred features of the invention will be apparent from the dependent claims, and the description which follows.

For a better understanding of the invention, and to show how embodiments of the same may be carried into effect, reference will now be made, by way of example, to the accompanying diagrammatic drawings in which:
FIG. 1 is a configuration diagram of a conventional content transmission/receiving system;
FIG. 2 is a configuration diagram of another conventional content transmission/receiving system;
FIG. 3 is a configuration diagram of a content transmission/receiving system according to a first exemplary embodiment of the present invention;
FIG. 4 is a configuration diagram of a content transmission/receiving system according to a second exemplary embodiment of the present invention;
FIG. 5 is a configuration diagram of a content transmission/receiving system according to a third exemplary embodiment of the present invention;
FIG. 6 is a configuration diagram of a content transmission/receiving system according to a fourth exemplary embodiment of the present invention;
FIG. 7 is a flowchart illustrating an authentication method according to an exemplary embodiment of the present invention;
FIG. 8 is a flowchart illustrating a first content service method according to an exemplary embodiment of the present invention;
FIG. 9 is a flowchart illustrating a first content output method according to an exemplary embodiment of the present invention;
FIG. 10 is a flowchart illustrating a first content relay method according to another exemplary embodiment of the present invention;
FIG. 11 is a flowchart illustrating a second content output method according to another exemplary embodiment of the present invention;
FIG. 12 is a flowchart illustrating a second content service method according to another exemplary embodiment of the present invention;
FIG. 13 is a flowchart illustrating a third content output method according to another exemplary embodiment of the present invention; and
FIG. 14 is a flowchart illustrating a second content relay method according to another exemplary embodiment of the present invention.

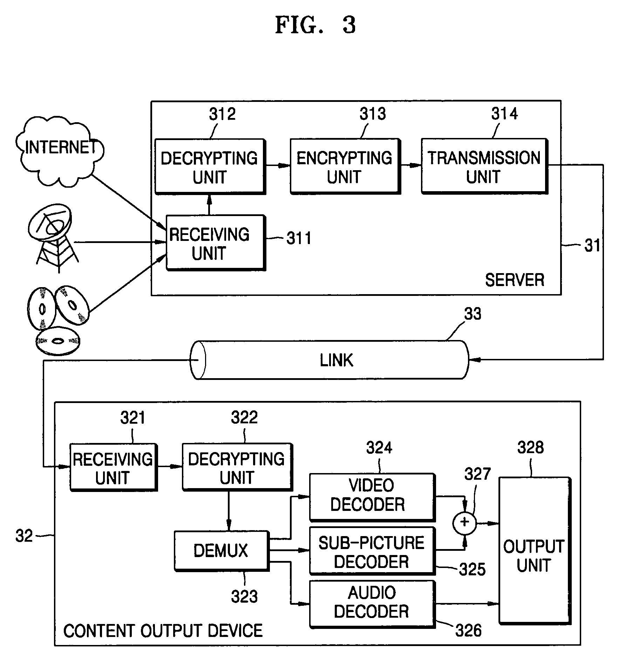

FIG. 3 is a configuration diagram of a content transmission/receiving system according to a first exemplary embodiment of the present invention.

Referring to FIG. 3, the first content transmission/receiving system includes a server 31, a content output device 32, and a link 33. The server 31 and the content output device 32 may be a consumer electronics (CE) devices or personal computer (PC) based devices. Specifically, the server 31 may be a set-top box, a digital video disk (DVD) player, or a blue-ray disk (BD) player, and the content output device 32 may be a digital television (DTV). In the present embodiment, the link 33 may be a wire medium or a wireless medium.

The server 31 includes a receiving unit 311, a decrypting unit 312, an encrypting unit 313, and transmission unit 314.

The receiving unit 311 receives data from a content provider located at a remote site. When the content provider intends to provide content to a plurality of devices located at remote sites, the content provider encrypts the content and transmits the encrypted content so as to prevent unauthorized devices from using the content without permission. Further, when the amount of data in the content is large, the content provider compresses the content to transmit the contents more quickly and easily.

That is, the receiving unit 311 receives the encrypted and compressed content and may receive the content via a network such as the Internet, via satellite communications, or by reading data recorded on a DVD according to the content providing method of the content provider.

The decrypting unit 312 reconstructs the encrypted compressed contents back into the compressed content by decrypting the encrypted compressed contents among the data received by the receiving unit 311 according to a first scheme. Here, the first scheme is a content protection scheme applied by the content provider. To protect the content stored on the DVD, currently a content protection for prerecorded media (CPPM) scheme has been applied. Therefore, when the receiving unit 311 reads the data stored on the DVD, the data received by the receiving unit 311 includes the compressed content which are encrypted according to the CCPM scheme.

At this moment, the decrypting unit 312 decrypts the compressed content encrypted according to the CCPM scheme to reconstruct the encrypted compressed content back into the compressed content. That is, the decrypting unit 312 generates a decryption key based on a media key block of the data that the receiving unit 311 receives, according to the CPPM scheme and a device ID (identification) of the server 31. Subsequently, the decrypting unit 312 decrypts the encrypted compressed content by using the generated decryption key. The media key block and the device ID are assigned to respective disks and devices by the content provider or a content protection manager.

More specifically, the decrypting unit 312 processes records of the media key block one after another by using the device ID, obtains a media key in the course of processing, and calculates the decryption key by using the media key. If the server 31 is a device discarded by the content provider or the content protection manager, the records of the media key block corresponding to the device ID of the server 31 are deleted by the content provider or the content protection manager. As a result, even when the decrypting unit 312 processes all the records of the media key block, it cannot obtain the media key.

The encrypting unit 313 encrypts the compressed contents reconstructed by the decrypting unit 312 according to a second scheme. The second scheme is a content protection scheme applied to protect the link 33.

In the present embodiment, the link 33 is an IEEE 1394 bus. The IEEE 1394 bus, which is a standard for a high-speed serial bus proposed by the IEEE, is currently used as a universal bus for connecting CE devices as well as used for connecting a computer and computer peripheral devices. For this reason, the IEEE 1394 bus is used in the present embodiment. Recently, a digital transmission content protection (DTCP) scheme has been used to protect the IEEE 1394 bus.

Thus, the encrypting unit 313 encrypts the compressed contents reconstructed by the decrypting unit 312 according to the DTCP scheme. More specifically, the encrypting unit 313 authenticates the content output device 32, and when the content output device 32 is authenticated as a device authorized to use the contents, the encrypting unit 313 exchanges the content key with the content output device 32, and encrypts the compressed content reconstructed by the decrypting unit 312 by using the content key.

However, those of ordinary skill in the art can envisage that the encrypting unit 313 could encrypt the compressed content reconstructed by the decrypting unit 312 according to another scheme besides the DTCP scheme. For example, the encrypting unit 313 may encrypt the compressed content reconstructed by the decrypting unit 312 according to a domain key management scheme. In the domain key management scheme, a unique domain key is assigned to every domain, and devices included in the same domain have identical domain keys. The encrypting unit 313 encrypts the compressed content reconstructed by the decrypting unit 312 using the domain key. Typically, the domain means a home network, and the devices included in the same domain can freely share their contents with one another. The extensible content protection (xCP) of IBM Corporation is such a domain key management scheme.

The transmission unit 314 transmits the compressed content encrypted by the encrypting unit 313 to the content output device 32 via the link 33. In the present embodiment, the transmission unit 314 can transmit the compressed content encrypted by the encrypting unit 313 to another device besides the illustrated content output device 32. According to the present embodiment, unlike in the conventional system, since the decoding of the compressed contents is not performed in the server 31 and transmitted in a compressed state, the server 31 has less processing load. Accordingly, the transmission unit 314 can transmit the encrypted compressed contents to several content output devices.

For example, when a plurality of devices are to play different scenes of a single disk, the receiving unit 311 reads encrypted compressed content recorded on the different portions of the disk, the decrypting unit 312 reconstructs the encrypted compressed content back into the compressed content by decrypting the encrypted compressed contents read by the receiving unit 311, the encrypting unit 313 encrypts the compressed content reconstructed by the decrypting unit 312, and the transmission unit 314 transmits the compressed content encrypted by the encrypting unit 313.

When the link 33 is an IEEE 1394 bus, the transmission unit 314 transmits the compressed contents encrypted according to the DTCP scheme via the IEEE 1394 bus. At this time, the transmission unit 314 transmits the encrypted compressed content whose form corresponds to a standard for transmission over the IEEE 1394 bus.

The content output device 32 includes a receiving unit 321, a decrypting unit 322, a demux 323, a video decoder 324, a sub-picture decoder 325, an audio decoder 326, a mixer 327, and an output unit 328.

The receiving unit 321 receives encrypted compressed content from the server 31 via the link 33. When the link 33 is an IEEE 1394 bus, the receiving unit 321 receives the compressed content encrypted according to the DTCP scheme via the IEEE 1394 bus. At this moment, the receiving unit 321 receives the encrypted compressed content whose form corresponds to a standard for transmission over the IEEE 1394 bus.

The decrypting unit 322 reconstructs the encrypted compressed contents back into the compressed contents by decrypting the encrypted compressed content received by the receiving unit 321 according to the content protection scheme applied to protect the link 33. When the link 33 is an IEEE 1394 bus, the decrypting unit 322 decrypts the encrypted compressed content received by the receiving unit 321 according to the DTCP scheme. More specifically, the decrypting unit 322 decrypts the encrypted compressed content using the content key which was previously exchanged between the server 31 according to the DTCP scheme.

The demux 323 separates the compressed content reconstructed by the decrypting unit 322 into compressed video content, compressed sub-picture content, and compressed audio content. The sub-picture content is related to the sub-picture displayed on the video screen, such as a caption, and an electronic program guide (EPG).

The video decoder 324 reconstructs the compressed video content back into the original video contents by decoding the compressed video content separated by the demux 323. If the compressed video content separated by the demux 323 have been compressed according to MPEG (Moving Picture Experts Group) 2 standard, the video decoder 324 decodes the content according to MPEG 2 standard.

The sub-picture decoder 325 reconstructs the compressed sub-picture contents into the original sub-picture content by decoding the compressed sub-picture content separated by the demux 323. If the compressed sub-picture contents separated by the demux 323 has been compressed according to JPEG (Joint Photographic Expert Group) standard, the sub-picture decoder 325 decodes the contents according to the JPEG standard.

The audio decoder 326 reconstructs the compressed audio content back into the original audio content by decoding the compressed audio content separated by the demux 323. If the compressed audio content separated by the demux 323 has been compressed according to MP3 (MPEG layer 3) standard, the audio decoder 326 decodes the contents according to the MP3 standard.

The mixer 327 mixes the video content reconstructed by the video decoder 324 and the sub-picture content reconstructed by the sub-picture decoder 325.

The output unit 328 outputs the content mixed by the mixer 327 and the audio content reconstructed by the audio decoder 326 to a user. That is, the output unit 328 outputs the mixed content to a display panel and the audio content to a speaker.

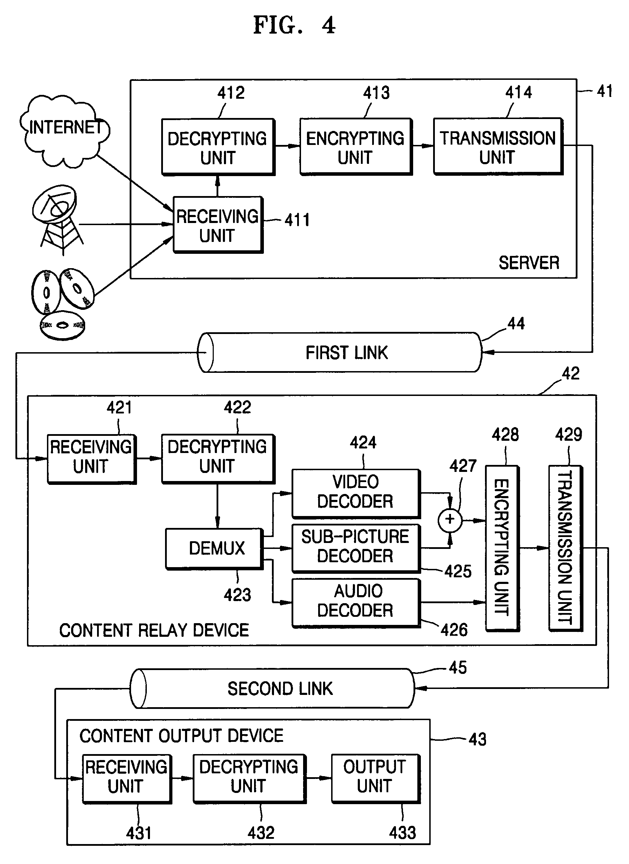

FIG. 4 is a configuration diagram of a content transmission/receiving system according to a second exemplary embodiment of the present invention.

Referring to FIG. 4, the second content transmission/receiving system includes a server 41, a content relay device 42, a content output device 43, a first link 44, and a second link 45. The sever 41 and the content output device 43 may be a CE device or a PC. Specifically, the server 41 may be a set top box, a DVD player, or a BD player among the CE devices, and the content output device 43 may be a DTV among the CE devices. In the present embodiment, the first link 44 and the second link 45 may be wire media or wireless media.

The server 41 includes a receiving unit 411, a decrypting unit 412, an encrypting unit 413, and a transmission unit 414.

In the content transmission/receiving system according to the present embodiment, the server 41 is identical to the server 31 in the content transmission/receiving system illustrated in FIG. 3. Therefore, the descriptions of the units included in the server 41 of the second content transmission/receiving system correspond to the descriptions of the units included in the server 31 of the content transmission/receiving system of Figure 3.

The content relay device 42 includes a receiving unit 421, a decryption unit 422, a demux 423, a video decoder 424, a sub-picture decoder 425, an audio decoder 426, a mixer 427, an encrypting unit 428, and a transmission unit 429.

In the transmission/receiving system according to the present embodiment, the receiving unit 421, the decryption unit 422, the demux 423, the video decoder 424, the sub-picture decoder 425, the audio decoder 426, and the mixer 427 included in the content relay device 42 correspond to the receiving unit 321, the decrypting unit 322, the demux 323, the video decoder 324, the sub-picture decoder 325, the audio decoder 326, and the mixer 327 included in the content output device 32 of the first content transmission/receiving system illustrated in FIG. 3. Thus, the descriptions of the units of the content relay device 42 correspond with the descriptions of the units of the content output device 32.

The encrypting unit 428 encrypts content mixed by the mixer 427 and audio contents reconstructed by the audio decoder 426 according to a third scheme, which is a content protection scheme applied to protect the second link 45.

In the present embodiment, the first link 44 is an IEEE 1394 bus, but on the other hand, the second link 45 is a digital visual interface (DVI). The DVI, which is a standard established by the DDWG (Digital Display Working Group), is developed to directly transmit a digital signal from a content output device to an output device. For this reason, the DVI is used as the second link 45 in the present embodiment. A high-bandwidth digital content protection (HDCP) scheme has been recently adapted to protect the DVI.

Therefore, if the second link 45 is a DVI, the encrypting unit 428 encrypts content mixed by the mixer 427 and audio content reconstructed by the audio decoder 426 according to the HDCP scheme. More specifically, the encrypting unit 428 authenticates the content output device 43, and when the content output device 43 is authenticated as a device authorized to use the contents, the encrypting unit 428 exchanges a content key with the content output device 43, and encrypts the content mixed by the mixer 427 and the audio content reconstructed by the audio decoder 426 by using the content key. According to the HDCP scheme, since content is protected bit by bit, encrypted contents are viewed as noise if the content is output without a decrypting process.

The transmission unit 429 transmits the content encrypted by the encrypting unit 428 to the content output device 43 via the second link 45. In the present embodiment, the transmission unit 429 transmits the content encrypted according to the HDCP scheme via the DVI. The form of the encrypted content to be transmitted by the transmission unit 429 corresponds to the standard for transmission over the DVI.

The content output device 43 includes a receiving unit 431, a decrypting unit 432, and an output unit 433.

The receiving unit 431 receives the encrypted content from the content relay unit 42 via the second link 45. If the second link 45 is the DVI, the receiving unit 421 receives the content encrypted according to the HDCP scheme via the DVI. At this moment, the receiving unit 431 receives the encrypted contents whose form corresponds to a standard for transmission over the DVI.

The decrypting unit 432 reconstructs the encrypted content back into the original content by decrypting the encrypted content received by the receiving unit 431 according to the content protection scheme applied to protect the second link 45. If the second link is a DVI, the decrypting unit 432 decrypts the encrypted content received by the receiving unit 431 according to the HDCP scheme. More specifically, the decrypting unit 432 decrypts the encrypted content by using the content key previously exchanged with the content relay device 42 according to the HDCP scheme.

The output unit 433 outputs the content decrypted by the decrypting unit 432 to a user. That is, the output unit 433 outputs content mixed by the mixer 427 included in the content decrypted by the decrypting unit 432 to the display panel, the audio contents reconstructed by the audio decoder 426 to the speaker.

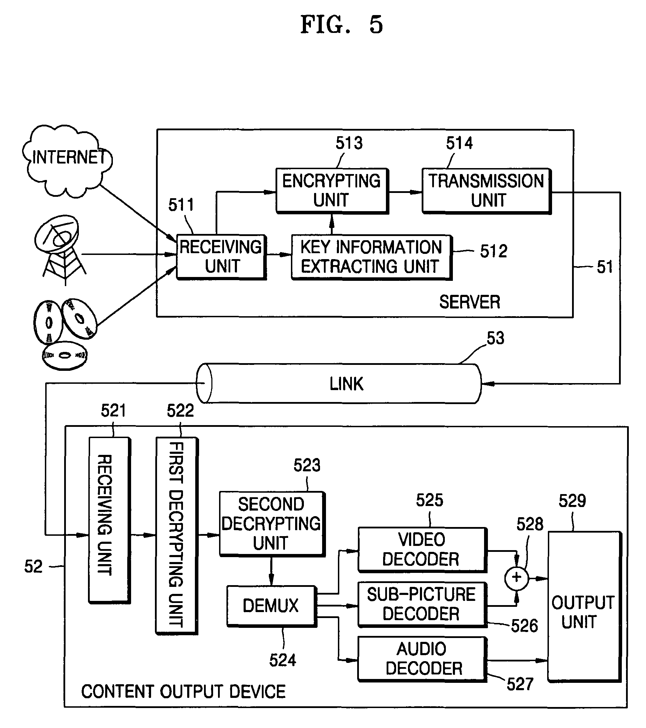

FIG. 5 is a configuration diagram of a content transmission/receiving system according to a third exemplary embodiment of the present invention.

Referring to FIG. 5, the content transmission/receiving system includes a server 51, a content output device 52, and a link 53. The server 51 and the content output device 52 may be a CE device or a PC. In particular, the server 51 may be a set-top box, a DVD player, or a BD player, and the content output device 52 may be a DTV. In the present embodiment, the link 53 may be a wire medium or a wireless medium.

The server 51 includes a receiving unit 511, a key information extracting unit 512, an encrypting unit 513, and a transmission unit 514.

The receiving unit 511 receives data from the content provider located at a remote site. As described above, the receiving unit 511 receives the content encrypted and compressed according to the first scheme, which is a content protection scheme applied by the content provider. When the receiving unit 511 reads data recoded on the DVD, the data received by the receiving unit 511 includes the compressed content encrypted according to the CPPM scheme.

The key information extracting unit 512 extracts key information necessary for generating a decryption key from the data received by the receiving unit 511. When the data received by the receiving unit 511 includes the compressed content encrypted by the CPPM scheme, the key information becomes a media key block.

The encrypting unit 513 encrypts the encrypted compressed content and the key information extracted by the key information extracting unit 512, which are included in the data received by the receiving unit 511, according to the second scheme. The second scheme is a content protection scheme applied to protect the link 53. Particularly, the encrypting unit 513 can implement more secure content protection by doubly encrypting the encrypted compressed contents received by the receiving unit 511.

If the link 53 is an IEEE 1394 bus, the encrypting unit 513 further encrypts the encrypted compressed content received by the receiving unit 511 and the key information extracted by the key information extracting unit 512 according to the DTCP scheme. More specifically, the encrypting unit 513 authenticates the content output unit 52, and when the content output device 52 is authenticated as a device authorized to use the contents, the encrypting unit 513 exchanges the content key with the content output device 52, and encrypts the encrypted compressed content received by the receiving unit 511 and the key information extracted by the key information extracting unit 512 using the content key.

However, those of ordinary skill in the art can understand that the encrypting unit 513 can encrypt the encrypted compressed content received by the receiving unit 511 and the key information extracted by the key information extracting unit 512 according to another scheme besides the DTCP scheme. For example, the encrypting unit 513 may encrypt the encrypted compressed content received by the receiving unit 511 and the key information extracted by the key information extracting unit 512 according to a domain key management scheme.

In the present embodiment, the encrypting unit 513 authenticates the content output device 52 to receive the double-encrypted compressed content and the encrypted key information, and then encrypts the content and the key information based on the authenticating result.

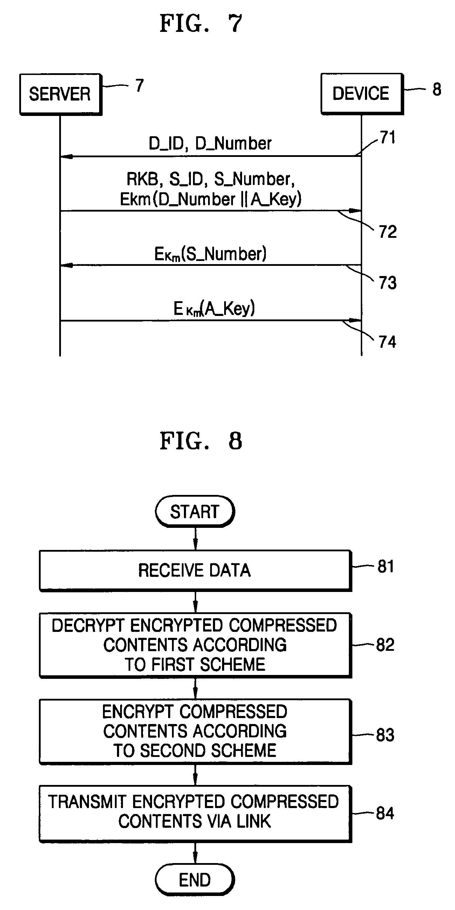

FIG. 7 is a flowchart illustrating an authentication method according to an exemplary embodiment of the present invention.

Referring to FIG. 7, the authentication method includes operations as described below. In particular, the authentication method relates to a BD. According to the BD standard, a server 7 and a device 8 have a device key set which is provided by a BD forum. An authorized device, processes records on a renewal key block, which is a region in the BD, one after another by using its own device key set, and obtains a media key Km in the course of processing.

In the operation 71, the device 8 generates a random number D_Number, and transmits its device ID D_ID and the generated random number D_Number to the server 7.

In the operation 72, when the server 7 receives the device ID D_ID and the random number D_Number, the server 7 generates a random number S_Number and an authentication key A_Key. Subsequently, the server 7 encrypts the received D_Number and the generated A_Key by using the obtained media key Km. The server 7 transmits the renewal key block, its server ID S_ID, the generated random number S_Number, and the encrypted D_Number and A_Key. As illustrated in FIG. 7, the authentication key A_Key is not transmitted in the operation 72, but may be transmitted in the operation 74. When the authentication key A_Key is transmitted in the operation 74, the server 4 transmits the renewal block, its server ID S_ID, the generated random number S_Number, and the encrypted D_Number.

In the operation 73, when the device 8 receives the renewal key block, the server ID S_ID, the generated random number S_Number, and encrypted D_Number and

A_Key, transmitted in the operation 72, the device 8 obtains the media key Km from the received renewal key block and reconstructs the original random number D_Number and authentication key A_Key by decrypting the encrypted random number D_Number and authentication key A_Key by using the media key Km. If the authentication key A_Key is not transmitted in the operation 72 but in the operation 73, the device 8 receives the renewal key block, the sever ID S_ID, the generated random number S_Number, and the encrypted random number D_Number in the operation 73. At this moment, when the random number D_Number transmitted by the device 8 and the random number D_Number reconstructed by the device 8 are identical to each other, the device 8 authenticates the server 7. When the server 7 is authenticated, the device 8 encrypts the received generated random number S_Number by using the obtained media key Km, and transmits the encrypted generated random number S_Number.

In the operation 74, the server 7 receives the encrypted generated random number S_Number transmitted in the operation 73, and reconstructs the original generated random number by decrypting the encrypted generated random number S_Number by using the media key Km. Here, when the generated random number S_Number transmitted by the server 7 and the generated random number S_Number reconstructed by the server 7 are identical to each other, the server 7 authenticates the device 8. When the device 8 is authenticated as an authorized device, if the authentication key A_Key is not transmitted in the operation 72, the server 7 encrypts the authentication key A_Key by using the media key Km and transmits the encrypted authentication key A_Key.

Through the operations described above, the server 7 and the device 8 can authenticate each other and share the authentication key A_Key. If the authentication method illustrated in FIG. 7 is applied to the encrypting unit 513 illustrated in FIG. 5, the server 7 corresponds to the server 51, and the device 8 corresponds to the content output device 52. At this time, the encrypting unit 513 does not perform the encrypting procedure until the authentication operations illustrated in FIG. 7 are executed. The authentication key A_Key shared by the server 51 and the content output device 52 is used as an encryption key.

Referring to FIG. 5 again, the transmission unit 514 transmits the compressed content double-encrypted by the encrypting unit 513 and the encrypted key information to the content output device 52. In the embodiment illustrated in FIG. 5, the transmission unit 514 can transmits the compressed content double-encrypted by the encrypting unit 513 and the encrypted key information to another device besides the content output device 52 illustrated in FIG. 5. According to this embodiment, unlike in the conventional art, since the decoding of the compressed content is not performed in the server 51, but transmitted in a compressed state, the server 51 has less processing load. Accordingly, the transmission unit 514 can transmits the double-encrypted compressed contents to several content output device.

If the link 53 is an IEEE 1394 bus, the transmission unit 514 transmits the compressed content doubly encrypted and the key information encrypted according to the DTCP scheme via the IEEE 1394 bus. At this moment, the transmission unit 514 transmits the double-encrypted compressed content and the encrypted key information whose forms correspond to the standard for transmission over the IEEE 1394 bus 53.

The content output device 52 includes a receiving unit 521, a first decrypting unit 522, a second decrypting unit 523, a demux 524, a video decoder 525, a sub-picture decoder 526, an audio decoder 527, a mixer 528, and an output unit 529.

The receiving unit 521 receives the double-encrypted compressed content and the encrypted key information from the server 51 via the link 53. If the link 53 is the IEEE 1394 bus, the receiving unit 521 receives the compressed content doubly encrypted and the key information encrypted according to the DTCP scheme via the IEEE 1394 bus. Here, the receiving unit 521 receives the double-encrypted compressed content and the encrypted key information whose forms correspond to the standard for transmission over the IEEE 1394 bus 53.

The first decrypting unit 522 receives the double-encrypted compressed content and the encrypted key information from the server 51 via the link 53. If the link 53 is an IEEE 1394 bus, the receiving unit 521 receives the compressed content doubly encrypted and the key information encrypted according to the DTCP scheme via the IEEE 1394 bus. At this moment, the receiving unit 521 receives the double-encrypted compressed content and the encrypted key information whose forms correspond to the standard for transmission over the IEEE 1394 bus 53.

The first decrypting unit 522 reconstructs the double-encrypted compressed content and the encrypted key information back into the encrypted compressed content and the key information, respectively, by decrypting the double-encrypted compressed content and the encrypted key information which are received by the receiving unit 521 according to a first scheme. The first scheme is a content protection scheme applied to protect the link 53. If the link 53 is the IEEE 1394 bus, the first decrypting unit 522 decrypts the double-encrypted compressed content and the encrypted key information which are received by the receiving unit 521 according to the DTCP scheme. More specifically, the first decrypting unit 522 decrypts the double-encrypted compressed content and the encrypted key information by using a content key previously exchanged with the server 51 according to the DTCP scheme.

The second decrypting unit 523 reconstructs the encrypted compressed content back into the compressed content by further decrypting the encrypted compressed content, which were reconstructed by the first decrypting unit 522, based on the key information reconstructed by the first decrypting unit 522 according to a second scheme. The second scheme is a content protection scheme applied by the content provider. If the encrypted compressed content reconstructed by the first decrypting unit 522 are data recorded on a DVD, the key information reconstructed by the first decrypting unit 522 is a media key block. That is, the second decrypting unit 523 generates a decryption key based on the media key block reconstructed by the first decrypting unit 522 according to the CPPM scheme and the device ID of the content output device 52. Subsequently, the second decrypting unit 523 decrypts the encrypted compressed content reconstructed by the first unit 522 by using the generated decryption key.

As described above, the decryption key is generated based on the device ID of the content output device 52, and therefore, the content output device such as a DTV is under the control of the content provider or the content protection manager. By the operation described above, the range of protection of the content can be extended to the content output device 52.

The demux 524 separates the compressed content reconstructed by the second decrypting unit 523 into compressed video content, compressed sub-picture contents and compressed audio content.

The video decoder 525 reconstructs the compressed video content back into the original video contents by decoding the compressed video contents separated by the demux 524. If the compressed video contents separated by the demux 524 have been compressed according to the MPEG 2 standard, the video decoder 525 decodes the content according to the MPEG 2 standard.

The sub-picture decoder 526 reconstructs the compressed sub-picture content back into the original sub-picture contents by decoding the compressed sub-picture content separated by the demux 524. If the sub-picture content separated by the demux 524 has been compressed according to the JPEG standard, the sub-picture decoder 564 decodes the content according to the JPEG standard.

The audio decoder 527 reconstructs the compressed audio content back into the original audio contents by decoding the compressed audio content separated by the demux 524. If the compressed audio content separated by the demux 524 has been compressed according to the MP3 standard, the audio decoder 527 decodes the content according to the MP3 standard.

The mixer 528 mixes the video content reconstructed by the video decoder 525 and the sub-picture content reconstructed by the sub-picture decoder 526.

The output unit 529 outputs the contents mixed by the mixer 528 and the content reconstructed by the audio decoder 527 to a user. That is, the output unit 529 outputs the content mixed by the mixer 528 to a display panel, and the audio content reconstructed by the audio decoder 527 to a speaker.

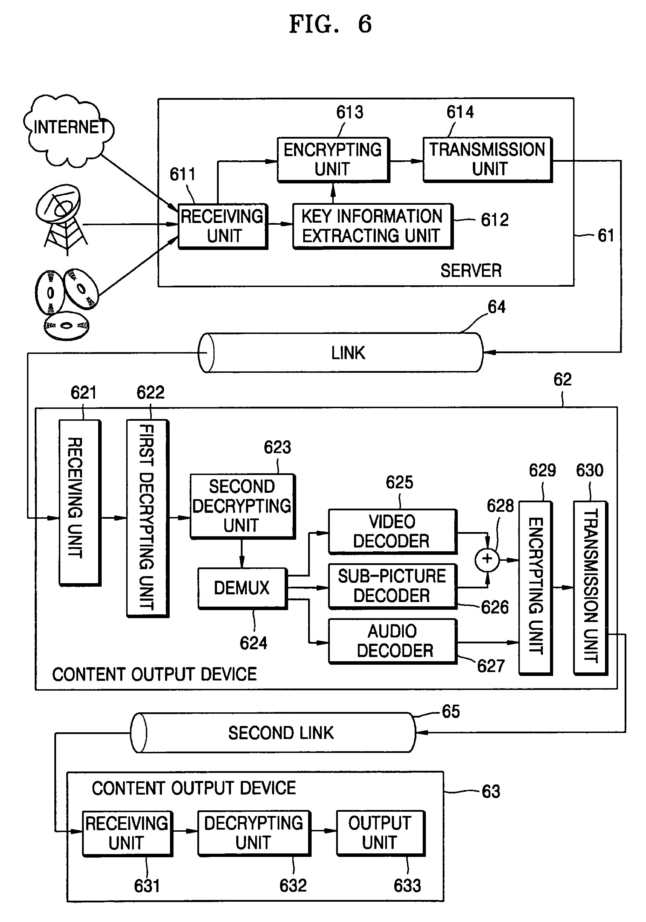

FIG. 6 is a configuration diagram of a fourth content transmission/receiving system according to a fourth exemplary embodiment of the present invention.

Referring to FIG. 6, the content transmission/receiving system includes a server 61, a content relay device 62, a content output device 63, a first link 64, and a second link 65. The server 61 and content output device 63 may be a CE device or a PC. Specifically, the server 61 may be a set top box, a DVD player, or BD player, and the content output device 63 may be a DTV. In the present embodiment, the first link 64 and second link 65 may be wire media or wireless media.

The server 61 includes a receiving unit 611, a key information extracting unit 612, an encrypting unit 613, and a transmission unit 614.

In the content transmission/receiving system according to the present embodiment, the server 61 corresponds to the server 51 in the third content transmission/receiving system illustrated in FIG. 5. Therefore, the descriptions of the receiving unit 611, the key information extracting unit 612, the encrypting unit 613, and the transmission unit 614 included in the server 61 illustrated in FIG. 6 are substituted with the descriptions of the corresponding units included in the server 51 illustrated in FIG. 5.

The content relay device 62 includes a receiving unit 621, a first decrypting unit 622, a second decrypting unit 623, a demux 624, a video decoder 625, a sub-picture decoder 626, an audio decoder 627, a mixer 628, an encrypting unit 629, and a transmission unit 630.

In the content transmission/receiving system according to the present embodiment, the receiving unit 621, the first decrypting unit 622, the second decrypting unit 623, the demux 624, the video decoder 625, the sub-picture decoder 626, the audio decoder 627, and the mixer 628 included in the content relay device 62 are the same as the receiving unit 521, the first decrypting unit 522, the second decrypting unit 523, the demux 524, the video decoder 525, the sub-picture decoder 526, the audio decoder 527, and the mixer 528 included in the content output device 52 of the content transmission/receiving system illustrated in FIG. 3. Therefore, descriptions of these units included in the content relay device 62 are substituted with the descriptions of the corresponding units included in the content output device 52 illustrated in FIG. 3.

The encrypting unit 629 encrypts the contents mixed by the mixer 628 and the audio contents reconstructed by the audio decoder 627 according to a third scheme, which is a content protection scheme applied to protect the second link 65.

In the present embodiment, the first link 64 may be an IEEE 1394 bus, and the second link 65 may be a DVI. Accordingly, if the second link 65 is a DVI, the encrypting unit 629 encrypts the content mixed by the mixer 628 and the audio content reconstructed by the audio decoder 627 according to the HDCP scheme.

More specifically, the encrypting unit 629 authenticates the content output device 63, and when the content output device is authenticated as an authorized device to use the content, the encrypting unit 629 exchanges a content key with the content output unit 63, and encrypts, bit by bit, the contents mixed by the mixer 628 and the audio contents reconstructed by the audio decoder 627 by using the content key. According to the HDCP scheme, since content are protected bit by bit, encrypted content are viewed as noise if the contents are output without a decrypting process.

The transmission unit 630 transmits the content encrypted by the encrypting unit 629 to the content output device 63 via the second link 65. In the present embodiment, the transmission unit 630 transmits the content encrypted according to the HDCP scheme via the DVI. The form of the encrypted content to be transmitted by the transmission unit 630 corresponds to the standard for transmission over the DVI.

The content output device 63 includes a receiving unit 631, a decrypting unit 632, and an output unit 633.

The receiving unit 631 receives the encrypted content from the content relay unit 62 via the second link 65. If the second link 65 is the DVI, the receiving unit 631 receives the content encrypted according to the HDCP scheme via the DVI. At this moment, the receiving unit 631 receives the encrypted content whose form corresponds to a standard for transmission over the DVI.

The decrypting unit 632 reconstructs the encrypted content back into the original content by decrypting the encrypted content received by the receiving unit 631 according to the content protection scheme applied to protect the second link 65. If the second link is a DVI, the decrypting unit 632 decrypts the encrypted content received by the receiving unit 631 according to the HDCP scheme. More specifically, the decrypting unit 632 decrypts the encrypted content by using the content key previously exchanged with the content relay device 62 according to the HDCP scheme.

The output unit 633 outputs the content decrypted by the decrypting unit 632 to a user. That is, the output unit 633 outputs the content mixed by the mixer 628, which are included in the decrypted content, to the display panel, and the audio content reconstructed by the audio decoder 627 to the speaker.

FIG. 8 is a flowchart illustrating a first content service method according to an exemplary embodiment of the present invention.

Referring to FIG. 8, the first content service method includes operations as described below. The operations of the first content service method are implemented in time series in the server 31 illustrated in FIG. 3 or the server 41 illustrated in FIG. 4. Therefore, the above descriptions of the server 31 illustrated in FIG. 3 and server 41 illustrated in FIG. 4 are applied to the first content service method even when there are omitted descriptions regarding the servers 31 and 41 below.

In the operation 81, the server 31 illustrated in FIG. 3 or the server 41 illustrated in FIG. 4 receives data from the content provider located at a remote site. At this moment, the server 31 or 41 can receive contents via a network such as the Internet, via satellite communications, or by reading the data recorded on a DVD, according to a content providing method of the content provider.

In the operation 82, the server 31 or 41 reconstructs encrypted compressed contents back into the compressed contents by decrypting the compressed contents, which are encrypted according to a first scheme, among the data received in the operation 81. The first scheme is a content protection scheme applied by the content provider.

In the operation 83, the server 31 or 41 encrypts the compressed content, which are reconstructed in the operation 82, according to a second scheme that is a content protection scheme applied to protect the link 33 illustrated in FIG. 3 or the first link 44 illustrated in FIG. 4.

In the operation 84, the server 31 or 41 transmits the compressed content which are encrypted in the operation 83 to the content output device 32 or the content relay device 42 via the link 33 or the first link 44. At this moment, the server 31 or the server 41 can transmit the encrypted compressed content to other devices besides the content output device illustrated in FIG. 3 or the content relay device illustrated in FIG. 4.

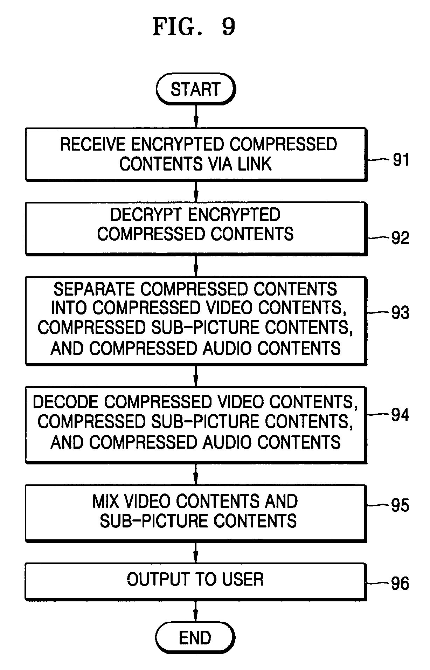

FIG. 9 is a flowchart illustrating a content output method according to an exemplary embodiment of the present invention.

Referring to FIG. 9, the content output method includes operations as described below. The operations of the first content output method are implemented in time series in the content output device 32 illustrated in FIG. 3. Therefore, the above descriptions of the content output device 32 illustrated in FIG. 3 are applied to the first content output method even when there are omitted descriptions regarding the content output device 32 below.

In the operation 91, the content output device 32 receives the encrypted compressed content from the server 32 via the link 33.

In the operation 92, the content output device 32 reconstructs the encrypted compressed content back into the compressed content by decrypting the encrypted compressed content, which are received in the operation 91, according to the content protection scheme applied to protect the link 33.

In the operation 93, the content output device 32 separates the compressed content which are reconstructed in the operation 92 into the compressed video contents, the compressed sub-picture contents, and the compressed audio content.

In the operation 94, the content output device 32 reconstructs the compressed video content back into the original video content by decoding the compressed video content which is separated in the operation 93, reconstructs the compressed sub-picture content back into the original sub-picture content by decoding the compressed sub-picture content which is separated in the operation 93, and reconstructs the compressed audio content back into the original audio content by decoding the compressed audio content which are separated in the operation 93.

In the operation 95, the content output device 32 mixes the video content and the sub-picture content, which are reconstructed in the operation 94.

In the operation 96, the content output device 32 outputs the content mixed in the operation 95 and the audio content reconstructed in the operation 94 to the user.

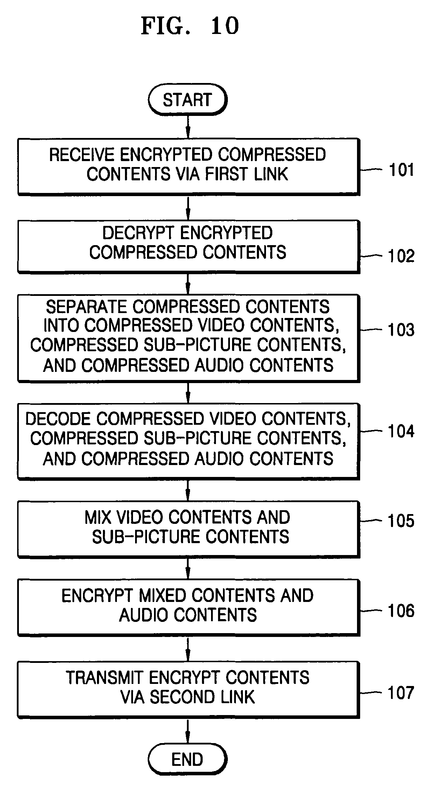

FIG. 10 is a flowchart illustrating a content relay method according to an exemplary embodiment of the present invention.

Referring to FIG. 10, the first content relay method includes operations as described below. The operations of the first content relay method are implemented in time series in the content relay device 42 illustrated in FIG. 4. Therefore, the above descriptions of the content relay device 42 illustrated in FIG. 4 are applied to the first content relay method even when there are omitted descriptions regarding the content relay device 42 below.

In the operation 101, the content relay device 42 receives the encrypted compressed content from the server 41 via the first link 44.

In the operation 102, the content relay device 42 reconstructs the encrypted compressed content back into the compressed content by decrypting the encrypted compressed content, which are received in the operation 101, according to a content protection scheme applied to protect the first link 44.

In the operation 103, the content relay device 42 separates the compressed content reconstructed in the operation 102 into the compressed video content, the compressed sub-picture content, and the compressed audio content.

In the operation 104, the content relay device 32 reconstructs the compressed video content back into the original video contents by decoding the compressed video contents which are separated in the operation 103, reconstructs the compressed sub-picture content back into the original sub-picture content by decoding the compressed sub-picture content which is separated in the operation 103, and reconstructs the compressed audio contents back into the original audio content by decoding the compressed audio content which are separated in the operation 103.

In the operation 105, the content relay device 42 mixes the video content and the sub-picture content, which are reconstructed in the operation 104.

In the operation 106, the content relay device 42 encrypts the content mixed in the operation 105 and the audio content reconstructed in the operation 104 according to a third scheme, which is a content protection scheme applied to protect the second link 45.

In the operation 107, the content relay device 42 transmits the content encrypted in the operation 106 to the content output device 43 via the second link 45.

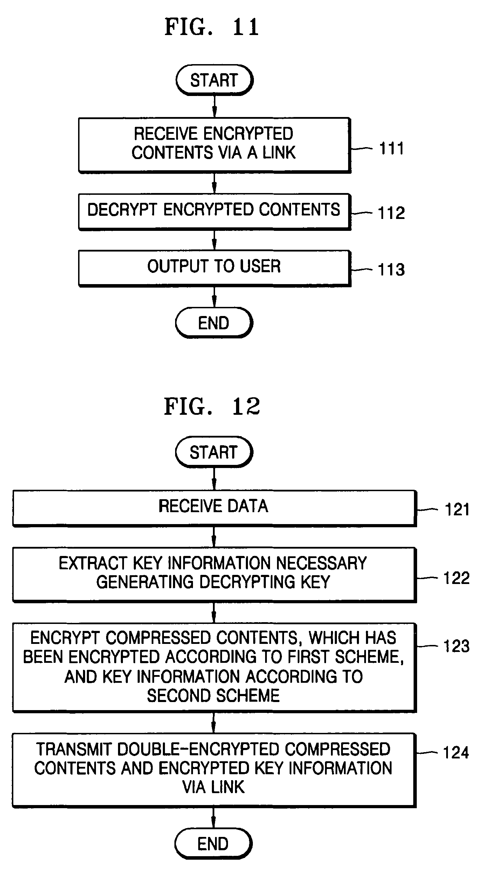

FIG. 11 is a flowchart illustrating a second content output method according to another exemplary embodiment of the present invention.

Referring to FIG. 11, the second content output method includes operations as described below. The operations of the second content output method are implemented in time series in the content output device 43 illustrated in FIG. 4 or the content output device 63 illustrated in FIG. 6. Therefore, the above descriptions of the content output device 43 illustrated in FIG. 4 or the content output device 63 illustrated in FIG. 6 are applied to the second content output method even when there are omitted descriptions regarding the content output device 43 or the content output device 63 below.

In the operation 111, the content output device 43 or 63 receives encrypted contents from the content relay device 42 or the content relay device 62 via the second link 45 illustrated in FIG. 4 or the second link 65 illustrated in FIG. 6.

In the operation 112, the content output device 43 or 63 reconstructs the encrypted content which are received in the operation 111 back into the original content by decrypting the encrypted contents according to a content protection scheme applied to protect the second link 45 or 65.

In the operation 113, the content output device 43 or 63 outputs the contents decrypted in the operation 112.

FIG. 12 is a flowchart illustrating a second content service method according to another exemplary embodiment.

Referring to FIG. 12, the second content service method includes operations as described below. The operations of the second content service method are implemented in time series in the server 51 illustrated in FIG. 5 or the server 61 illustrated in FIG. 6. Therefore, the above descriptions of the server 51 illustrated in FIG. 5 and server 61 illustrated in FIG. 6 are applied to the second content service method even when there are omitted descriptions regarding the servers 51 and 61 below.

In the operation 121, the server 51 or 61 receives data from a content provider located at a remote site. The received data includes compressed content which are encrypted according to a first scheme and key information necessary to generate a decryption key for the encrypted compressed content. The first scheme is a content protection scheme which is applied by the content provider.

In the operation 122, the server 51 or 61 extracts the key information necessary to generate the decryption key from the received data.

In the operation 123, the server 51 or 61 encrypts the compressed content that are encrypted according to the first scheme and the key information that is extracted in the operation 122, among the data received in the operation 121, according to a second scheme. The second scheme is a content protection scheme applied to protect the link 53 illustrated in FIG. 5 or the first link 64 illustrated in FIG. 6. At this moment, the server 51 or 61 authenticates the content output device 52 illustrated in FIG. 5 or the content output device 63 illustrated in FIG. 6 to receive the double-encrypted compressed content and the encrypted key information, and encrypts the encrypted compressed contents and the key information based on the authentication result.

In the operation 124, the server 51 or 61 transmits the double-encrypted compressed contents and the encrypted key information to the content output device 52 or 63 via the link 53 or the first link 64. Here, the server 51 or 61 can transmit the double-encrypted compressed content and the encrypted key information to another device besides the content output device 52 or 63.

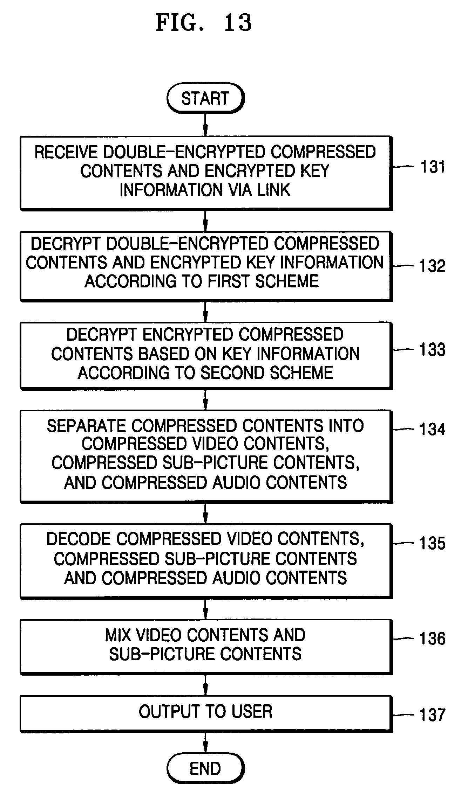

FIG. 13 is a flowchart illustrating a third content output method according to another exemplary embodiment of the present invention.

Referring to FIG. 13, the third content output method includes operations as described below. The operations of the third content output method are implemented in time series in the content output device 52 illustrated in FIG. 5. Therefore, the above descriptions of the content output device 52 illustrated in FIG. 5 are applied to the third content output method even when there are omitted descriptions regarding the content output device 52 below.

In the operation 131, the content output device 52 receives the double-encrypted compressed contents and the encrypted key information from the server 51 via the link 53.

In the operation 132, the content output device 52 reconstructs the double-encrypted compressed content and the encrypted key information back into the encrypted compressed content and the original key information by decrypting the double-encrypted compressed content and the encrypted key information, which are received in the operation 131, according to a first scheme. The first scheme is a content protection scheme applied to protect the link 53.

In the operation 133, the content output device 52 reconstructs the encrypted compressed content, which are reconstructed from the double-encrypted compressed content in the operation 132, back into the compressed contents by decrypting the encrypted compressed content based on the key information, which is reconstructed in the operation 132, according to a second scheme. The second scheme is a content protection scheme applied by the content provider.

In the operation 134, the content output device 52 separates the compressed content reconstructed in the operation 133 into the compressed video contents, the sub-picture content, and the compressed audio content.

In the operation 135, the content output device 52 reconstructs the compressed video contents, which are separated from the compressed contents in the operation 134, back in the original video content by decoding the compressed content, in like manner, reconstructs the compressed sub-picture content back into the original sub-picture contents by decoding the compressed sub-picture content, and reconstructs the compressed audio content back into the original audio content by decoding the compressed audio content.

In the operation 136, the content output device 52 mixes the video content and the sub-picture content, both of which are reconstructed in the operation 135.

In the operation 137, the content output device 52 outputs the content mixed in the operation 136 and the audio content reconstructed in the operation 135 to a user.

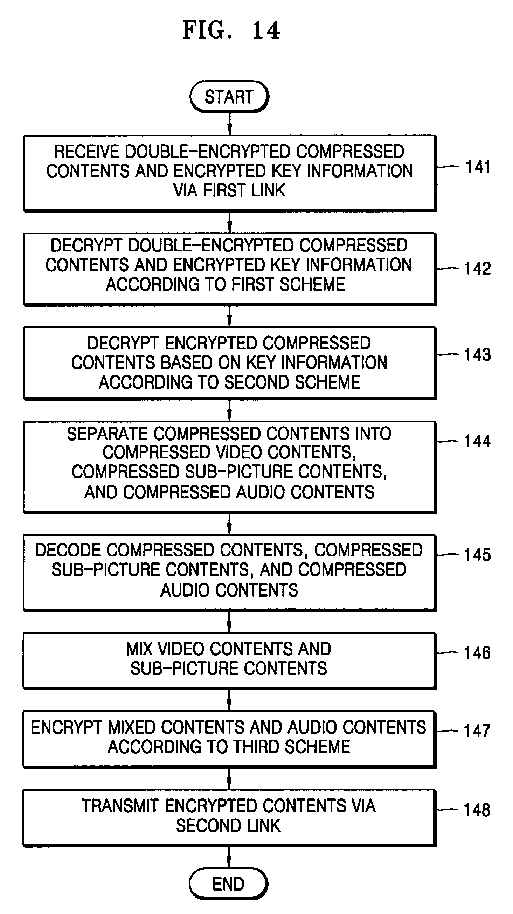

FIG. 14 is a flowchart illustrating a second content relay method according to another exemplary embodiment of the present invention.

Referring to FIG. 14, the second content relay method includes operations as described below. The operations of the second content relay method are implemented in time series in the content relay device 62 illustrated in FIG. 6. Therefore, the above descriptions of the content relay device 62 illustrated in FIG. 6 are applied to the second content relay method even when there are omitted descriptions regarding the content relay device 62 below.

In the operation 141, the content relay device 62 receives the double-encrypted compressed contents and the encrypted key information from the server 61 via the first link 64.

In the operation 142, the content relay device 62 reconstructs the double-encrypted compressed content and the encrypted key information back into the encrypted compressed content and the original key information by decrypting the double-encrypted compressed content and the encrypted key information, both of which are received in the operation 141, according to a first scheme. The first scheme is a content protection scheme applied to protect the first link 64.

In the operation 143, the content relay device 62 reconstructs the encrypted compressed content, which are reconstructed from the double-encrypted compressed contents in the operation 142, back into the compressed content by decrypting the encrypted compressed content based on the key information, which is reconstructed in the operation 142, according to a second scheme. The second scheme is a content protection scheme applied by the content provider.

In the operation 144, the content relay device 62 separates the compressed content reconstructed in the operation 143 into the compressed video content, the compressed sub-picture content, and the compressed audio contents.

In the operation 145, the content relay device 62 reconstructs the compressed video content, which are separated from the compressed content in the operation 144, back in the original video content by decoding the compressed content, in like manner, reconstructs the compressed sub-picture content back into the original sub-picture content by decoding the compressed sub-picture content, and reconstructs the compressed audio content back into the original audio content by decoding the compressed audio content.

In the operation 146, the content relay device 62 mixed the video content and the sub-picture content, both of which are reconstructed in the operation 145.

In the operation 147, the content relay device 62 encrypts the content mixed in the operation 146 and the audio content reconstructed in the operation 145 according to a third scheme, which is a content protection scheme applied to protect the second link 65.

In the operation 148, the content relay device 62 transmits the content encrypted in the operation 147 to the content output device 63 via the second link 65.

Meanwhile, the embodiments of the present invention can be written as computer programs and can be implemented in general-use digital computers that execute the programs using a computer readable recording medium. Examples of the computer readable recording medium include magnetic storage media (e.g., ROM, floppy disks, hard disks, etc.), optical recording media (e.g., CD-ROMs, or DVDs), and storage media such as carrier waves (e.g., transmission through the Internet).

According to the present invention, encrypting and decoding of contents are completely supported without an encoding process in a content server terminal at home, such as a DVD player and a BD player, and therefore the content protection can be implemented in CE devices even when the devices do not have a higher-than-standard definition (SD) grade encoder.

Further, according to the present invention, as a result of deleting the encoding process in the server terminal, the load of the server is reduced, and thereby a single server can provide contents to several content output devices such as DTVs.

Additionally, according to the present invention, double encrypting of the content is performed, and thus more secure protection of the contents can be implemented.

In particular, according to the present invention, the content output device such as a DTV is under the control of the content provider or the content protection manager, and therefore, the range of protection of content can be extended to the last terminal of transmission of the content and the content provider or the content protection manager can manage the content until the contents are destroyed.

While the present invention has been particularly shown and described with reference to exemplary embodiments thereof, it will be understood by those of ordinary skill in the art that various changes in form and details may be made therein without departing from the scope of the present invention as defined by the following claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A content service method comprising:
reconstructing first encrypted compressed content back into compressed content by decoding the first encrypted compressed content according to a first scheme;
encrypting the compressed content according to a second scheme to generate second encrypted compressed content; and
transmitting the second encrypted compressed content via a predetermined link.

2. The content service method of claim 1, wherein in the transmitting of the second encrypted compressed content, the second encrypted compressed content is transmitted to at least one device to play the second encrypted compressed content.

3. The content service method of claim 1 or 2, wherein the first scheme is a content protection scheme that is applied by a content provider providing the first encrypted compressed content and the second scheme is a content protection scheme applied to protect the predetermined link.

4. A server comprising:
a decrypting unit (312) arranged to reconstruct encrypted compressed content back into compressed content by decrypting the encrypted compressed contents according to a first scheme;
an encrypting unit (313) arranged to encrypt the compressed content, which is reconstructed by the decrypting unit, according to a second scheme; and
a transmission unit (134) arranged to transmit the compressed contents encrypted by the encrypting unit via a predetermined link.

5. A computer readable recording medium having embodied thereon a computer program for executing a content service method, wherein the content service method comprises:
reconstructing first encrypted compressed content back into compressed contents by decrypting the first encrypted compressed content according to a first scheme;
encrypting the compressed content according to a second scheme to generate second encrypted compressed content; and
transmitting the second encrypted compressed content via a predetermined link.

6. A content output method comprising:
receiving encrypted compressed contents via a predetermined link;
reconstructing the encrypted compressed contents back into compressed contents by decrypting the encrypted compressed contents;
reconstructing the compressed content back into original content by decoding the compressed content; and
outputting the original contents to a user.

7. The content output method of claim 6, wherein in the reconstructing of the encrypted compressed content, the encrypted compressed content are decrypted according to a content protection scheme which is applied to protect the predetermined link.

8. A content output device comprising:
a receiving unit (321) arranged to receive encrypted compressed content via a predetermined link;
a decrypting unit (322) arranged to reconstruct the encrypted compressed content back into compressed contents by decrypting the encrypted compressed content;
a decoder (323) arranged to reconstruct the compressed content back into original content by decoding the compressed content reconstructed by the decrypting unit (322); and
an output unit (328) arranged to output the original content reconstructed by the decoder to a user.

9. A computer readable recording medium having embodied thereon a computer program for executing a content output method, wherein the content output method comprises:
receiving encrypted compressed content via a predetermined link;
reconstructing the encrypted compressed contents back into compressed content by decrypting the encrypted compressed contents;
reconstructing the compressed content back into original contents by decoding the compressed contents; and
outputting the original content to a user.

10. A content relay method comprising:
receiving encrypted compressed contents via a first link;
reconstructing the encrypted compressed content back into compressed content by decrypting the encrypted compressed content;
reconstructing the compressed content back into original contents by decoding the compressed content;
encrypting the original content to generate encrypted content; and
transmitting the encrypted content via a second link.

11. The content relay method of claim 10, wherein in the reconstructing of the encrypted compressed content, the encrypted compressed content are decrypted according to a content protection scheme applied to protect the first link, and
in the encrypting of the original content, the original content are encrypted according to a content protection scheme applied to protect the second link.

12. A content output method comprising:
receiving encrypted content via a predetermined link;
reconstructing the encrypted contents back into original contents by decrypting the encrypted contents; and
outputting the original contents to a user.

13. The content output method of claim 12, wherein in the reconstructing of the encrypted content, the encrypted content are decrypted according to a content protection scheme applied to protect the predetermined link.

14. A content service method comprising:
double-encrypting compressed content, which have been encrypted according to a first scheme, according to a second scheme to generate double-encrypted compressed content; and
transmitting the double-encrypted compressed content via a predetermined link.

15. The content service method of claim 14, wherein in the transmitting of the double-encrypted compressed content, the double-encrypted compressed content is transmitted to at least one device to play the double-encrypted compressed content.

16. The content service method of claim 14 or 15, wherein the first scheme is a content protection scheme applied by a content provider which provides the compressed content encrypted according to the first scheme, and
the second scheme is a content protection scheme applied to protect the predetermined link.

17. The content service method of claim 14 15 or 16, further comprising:
extracting information necessary for generating a decryption key for the compressed content, which have been encrypted according to the first scheme, from data including the compressed content which have been encrypted according to the first scheme, wherein
the double-encrypting of the compressed content encrypts the compressed content which have been encrypted according to the first scheme and the information.

18. The content service method of any one of claims 14-17, wherein during the double-encrypting of the compressed content, a device is authenticated to receive the double-encrypted compressed content, and the double-encrypting is performed based on an authentication result.

19. A server comprising:
an encrypting unit arranged to double-encrypt compressed contents, which have been encrypted according to a first scheme, according to a second scheme to generate double-encrypted compressed content; and
a transmission unit arranged to transmit the double-encrypted compressed contents via a predetermined link.

20. A computer readable recording medium having embodied thereon a computer program for executing a content service method, wherein the content service method comprises:
double-encrypting compressed content, which have been encrypted according to a first scheme, according to a second scheme; and
transmitting the double-encrypted compressed content via a predetermined link.

21. A content output method comprising:
receiving double-encrypted compressed content via a predetermined link;
reconstructing the double-encrypted compressed content back into encrypted compressed contents by decrypting the double-encrypted compressed content according to a first scheme;
reconstructing the encrypted compressed content back into compressed content by further decrypting the encrypted compressed content according to a second scheme;
reconstructing the compressed content back into original content by further decoding the compressed content; and
outputting the original content to a user.

22. The content output method of claim 21, wherein the first scheme is a content protection scheme applied to protect the predetermined link, and
the second scheme is a content protection scheme applied by a content provider which provides the encrypted compressed contents.

23. The content output method of claim 21 or 22, wherein
during the receiving of the double-encrypted compressed content, encrypted information is received for further decrypting the encrypted compressed content according to the second scheme,
during the reconstructing of the double-encrypted compressed content, the encrypted information is reconstructed back into original information by decrypting the encrypted information, and
during the reconstructing of the encrypted compressed content, the decrypting is performed based on the original information.

24. A content output device comprising:
a receiving unit arranged to receive double-encrypted compressed contents via a predetermined link;
a first decrypting unit arranged to reconstruct the double-encrypted compressed contents back into encrypted compressed content by decrypting the double-encrypted compressed content according to a first scheme;
a second decrypting unit arranged to reconstruct the encrypted compressed contents back into compressed content by further decrypting the encrypted compressed content, which have been reconstructed by the first decrypting unit, according to a second scheme;
a decoder arranged to reconstruct the compressed content back into original contents by decoding the compressed content, which have been reconstructed by the second decrypting unit; and
an output unit arranged to output the original contents reconstructed by the decoder to a user.

25. A computer readable recording medium having embodied thereon a computer program for executing a content output method, wherein the content output method comprises:
receiving double-encrypted compressed content via a predetermined link;
reconstructing the double-encrypted compressed content back into encrypted compressed content by decrypting the double-encrypted compressed content according to a first scheme;
reconstructing the encrypted compressed content back into compressed content by further decrypting the encrypted compressed content according to a second scheme;
reconstructing the compressed content back into original content by decoding the compressed content; and
outputting the original content to a user.

26. A content relay method comprising:
receiving double-encrypted compressed content via a first link;
reconstructing the double-encrypted compressed content back into encrypted compressed contents by decrypting the double-encrypted compressed content according to a first scheme;
reconstructing the encrypted compressed contents back into compressed content by further decrypting the encrypted compressed content according to a second scheme;
reconstructing the compressed content back into original content by decoding the compressed content;
encrypting the original content to generate encrypted content; and
transmitting the encrypted content via a second link.

27. The content relay method of claim 26, wherein
during the reconstructing of the double-encrypted content, the decrypting is performed according to a content protection scheme applied to protect the first link, and
during the encrypting of the original contents, the encrypting is performed according to a content protection scheme applied to protect the second link.

28. The content relay method of claim 26 or 27, wherein
the first scheme is a content protection scheme applied to protect the first link; and
the second scheme is a content protection scheme applied by a content provider which provides the encrypted compressed contents.

29. The content relay method of claim 26, 27 or 28 wherein
during the receiving of the double-encrypted compressed content, encrypted information is received for further decrypting the encrypted compressed content according to the second scheme,
during the reconstructing of the double-encrypted compressed content, the encrypted information is reconstructed back into original information by decrypting the encrypted information, and
during the reconstructing of the encrypted compressed contents the decrypting is performed based on the original information.
